# EUROPÄISCHE PATENTSCHRIFT

(11) **EP 0 394 534 B1**
(45) Veröffentlichungstag und Bekanntmachung des Hinweises auf die Patenterteilung: **18.08.1993**
(21) Anmeldenummer: 89107730.7
(22) Anmeldetag: 28.04.1989
(51) Int. Cl.: B64F 1/22

(54) **Flugzeug-Schlepper ohne Schleppstange (Drehschaufel)**
Tractor for aircraft without a towing bar (rotating blade)
Remorqueur d'avion sans barre de remorquage (palette tournante)

(43) Veröffentlichungstag der Anmeldung: 31.10.1990
(73) Patentinhaber: MAN Gutehoffnungshütte Aktiengesellschaft, 46122 Oberhausen (DE)
(72) Erfinder: Franken, Wilhelm, Dipl.-Ing., D-4230 Wesel (DE); Michaelsen, Lars Torsten, Dipl.-Ing., D-5810 Herdecke (DE); Pohé, Dieter, Dipl.-Ing., D-4650 Gelsenkirchen (DE)
(74) Vertreter: Wolff, Michael, Dipl.-Phys.

(56) Entgegenhaltungen:
- EP-A- 0 276 779
- DE-A- 3 616 807
- DE-B- 3 732 664

## Beschreibung

Die Erfindung betrifft einen Flugzeug-Schlepper ohne Schleppstange, gemaß Oberbegriff des Anspruches 1 oder 2.

Bei einem aus der DE-OS/PS 36 16 807 (Schopf/MAN) bekannten Bugsierschlepper dieser Art ist die als Plattform zur Aufnahme des Flugzeug-Bugfahrwerks vorgesehene Hubschaufel starr mit dem Fahrgestell-Vorderteil verbunden, beispielsweise einstückig mit diesem ausgebildet. Die beiden Zugarme und die zwei entsprechenden Haltearme, welche die zwei Räder des Bugfahrwerks auf die Unterstützungsfläche der Hubschaufel niederhalten, sind in ihrer zeitweiligen bzw. ständigen waagrechten Querlage bezuglich der Schlepper-Längsachse senkrecht dazu unbeweglich.

Infolge dieser Anordnung der Hubschaufel sowie der Zug- und der Haltearme (Halter) erfolgt bei einer Kurvenfahrt des Schleppers, der ein schrägstehendes zweirädriges Bugfahrwerk des geschleppten Flugzeugs aufgenommen hat, eine einseitige Anhebung eines Bugrades und eine erhöhte Belastung des anderen Bugrades durch die starre Hubschaufel, wobei die Greif- und die Haltearme einerseits sowie die Bugräder andererseits Relativbewegungen ausführen, die stark reibungsbehaftet sind.

Nachteilig ist daran also, daß der Vorteil des bekannten Schleppers, daß die Bugreifen des Flugzeugs weder beim Erfassen noch beim Anhub durch eine ungewöhnliche Verformung beansprucht werden, weil die Hubschaufel einen der Fahrbahn entsprechenden Ersatzboden schafft, auf dem die Bugreifen natürlich gewalkt werden, bei Flugzeugen mit schrägstehendem Bugfahrwerk verloren geht.

Der Erfindung liegt daher die Aufgabe zugrunde, einen Schlepper zum Bugsieren eines Flugzeuges ohne Schleppstange zu schaffen, welcher den genannten Vorteil auch bei Flugzeugen mit schrägstehendem Bugfahrwerk bietet, indem er Relativbewegungen zwischen aufgenommenem Bugfahrwerk einerseits und Hubschaufel sowie Zug- und Haltearmen andererseits völlig bzw. weitgehend vermeidet.

Diese Aufgabe ist bei einem Schlepper der eingangs genannten Art erfindungsgemäß durch die kennzeichnenden

Merkmale des Anspruches 1 bzw. 2 gelöst.

Dadurch wird vorteilhafterweise erreicht, daß bei einer Drehung des Radpaares eines schrägstehenden Bugfahrwerkes um die die Radachse senkrecht schneidende Waagrechte, wie sie während der Kurvenfahrt des Schleppers auftritt, das Radpaar die es unterstützende Hubschaufel mitdreht, so daß keine Relativbewegung stattfindet; und daß jedes sich zur Seite neigende Bugrad den anliegenden Zug- und Haltearm verschieben kann, was die gegenseitige Reibung herabsetzt. Die Reifen auch eines schräg stehenden Bugfahrwerkes werden deshalb auch bei einer Kurvenfahrt des Schleppers weitgehend geschont.

Die EP-A-0 276 779 (Heck) offenbart zwar einen Flugzeug-Schlepper ohne Schleppstange, gemäß Oberbegriff des Anspruches 2, dessen Hubschaufel um eine waagrechte Längsachse des Fahrgestells drehbar angeordnet ist, so daß die mittels zweier Fluidzylinder heb- und senkbare Hubschaufel seitlich neigbar ist, damit bei Kurvenfahrten des Schleppers mit aufgeladenem Bugrad keine unzulässigen Beanspruchungen auftreten, die durch eine Anlenkung der Hubschaufel am Fahrgestell über ein Längslenker-Parallelogramm (z.B. aus Fluidzylindern) vermieden werden, von denen die beiden unteren Längslenker annähernd parallel zur Fahrzeug-Längsachse angeordnet sind, wenn die Hubschaufel angehoben ist, wobei sich die Wirkungslinien der beiden Fluidzylinder in der Längsmittelebene des Fahrgestells schneiden. - Bei diesem Schlepper ist aber die Drehachse der Hubschaufel nicht körperlich ausgebildet, sondern eine gedachte Linie, und hat dementsprechend auch keine Lagerstelle am Fahrgestell.

Bei einer bevorzugten Ausführungsform des erfindungsgemäßen Schleppers ist die Drehachse der Hubschaufel mit einem querliegenden, zweiarmigen Wipphebel drehfest verbunden, welcher an seinen beiden freien Enden mittels je eines einfachwirkenden Hydraulikzylinders unterstützt ist, die durch eine drosselbare Hydraulikleitung miteinander verbunden sind. - Diese Hydraulik sorgt in Verbindung mit dem Wipphebel für eine Angleichung der Drehbewegungen der zwei Räder des Bugfahrwerks mit der dadurch belasteten Hubschaufel und verhindert bei Drosselung deren unabsichtliche Verdrehung im belastungsfreien Zustand bei gestrecktem Fahrgestell.

Bei der bevorzugten Ausführungsform weisen die hintergreifenden Zugarme je eine am Bugrad abrollende Hohlwalze auf, in der koaxial der fest damit verbundene Zylinder eines einfachwirkenden Hydraulikzylinders mit schwenkbarer Kolbenstange angeordnet ist; und sind diese zwei Zylinder durch eine Hydraulikleitung miteinander verbunden. - Jene beiden Hydraulikzylinder und ihre gegenseitige Verbindung bewirken, daß die Hohlwalzen der querliegenden Zugarme während ihres Hintergreifens der Bugreifen in gleicher Richtung und in gleichem Maße von den seitwärts kippenden Bugrädern verschoben werden, die sich ihrerseits bei einer Kurvenfahrt des Schleppers, der ein schrägstehendes Bugfahrwerk aufgenommen hat, mit der Hubschaufel in gleicher Richtung und in gleichem Maße zur Seite neigen. Dadurch wird die gegenseitige Reibung von Bugreifen und Zugarm-Hohlwalzen im wesentlichen auf einen Drehberührungspunkt beschränkt.

Bei der bevorzugten Ausführungsform weist der Bugrad Halter eine am Bugrad abrollende Walze auf, deren gegabelter Achs-Halter an einer geraden Querführung gelagert ist, die mittels zweier paralleler Längsführungen und eines zumindest einfachwirkenden Hydraulikzylinders zwischen diesen Längsführungen nach hinten bewegbar ist, wobei im Falle zweier Halter zwei durch eine Hydraulikleitung miteinander verbundene einfachwirkende Hydraulikzylinder vorgesehen sind. - Diese Ausgestaltung und Anordnung des Halters hat auf die gegenseitige Reibung von Halter und Bugrad die gleiche Wirkung wie die gewählte Ausgestaltung und Anordnung der Zugarme, wie sie zuvor charakterisiert wurde. Dabei ist es gleichgültig, ob nur ein einziger, die ganze Breite der Fahrgestell-Ausnehmung einnehmender Halter für beide Bugräder vorhanden ist oder ob zwei getrennte Halter für je ein Bugrad vorgesehen sind. Die für zwei Halter vorgesehene Verbindung der dann ebenfalls zwei Zylinder bewirkt, daß die beiden Halter während ihrer Anlage an den Bugreifen in einander entgegengesetzten Richtungen parallel zur Längsachse des Schleppers, aber in gleichem Maße von den bei dessen Kurvenfahrt vor- bzw. rückwärts bewegten Bugrädern verschoben werden. Dadurch ist die jederzeitige Anlage beider Halter an beiden Bugrädern gewährleistet. In diesem Zusammenhang verhindern die beiden Längsführungen des Halters die Schwergängigkeit des Kolbens des zwischen ihnen angeordneten Hydraulikzylinders, wenn der Halter außermittig am Bugfahrwerk bzw. am zugeordneten Bugrad angreift.

Bei der bevorzugten Ausführungsform sind die beiden Längsführungen der Halter-Querführung an einer die Fahrgestell-Ausnehmung querenden Brücke angeordnet, an welcher zwei Hydraulikzylinder zum Bewegen des Bugrad-Halters angreifen. Diese Brücke am vorderen Ende der Ausnehmung erlaubt es, einen oder zwei Halter ohne unmittelbare Verbindung der Quer- und Längsführungen mit dem Fahrgestell an der geeignetsten Stelle anzuordnen.

Im folgenden ist die Erfindung anhand der durch die Zeichnung beispielhaft dargestellten bevorzugten Ausführungsform des erfindungsgemäßen Flugzeug-Schleppers im einzelnen erläutert. Es zeigt:
Fig. 1 Eine Draufsicht auf die Ausführungsform mit Zugarmen in Längslage.

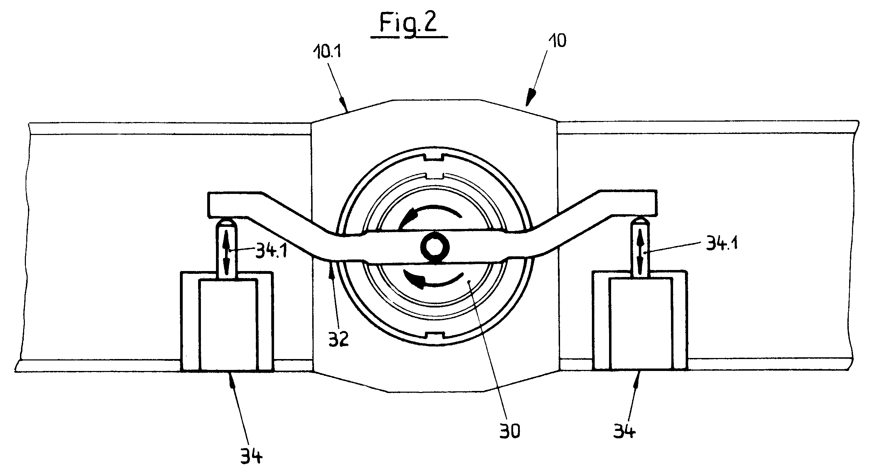

Fig. 2 Eine beidseitig abgebrochen dargestellte Vorderansicht einer Einzelheit der Ausführungsform.
Fig. 3 Eine abgebrochen dargestellte Draufsicht der Ausführungsform mit Zugarmen in Querlage.
Fig. 4 Einen Längsschnitt durch einen Zugarm nach der Linie IV-IV in Fig. 3.

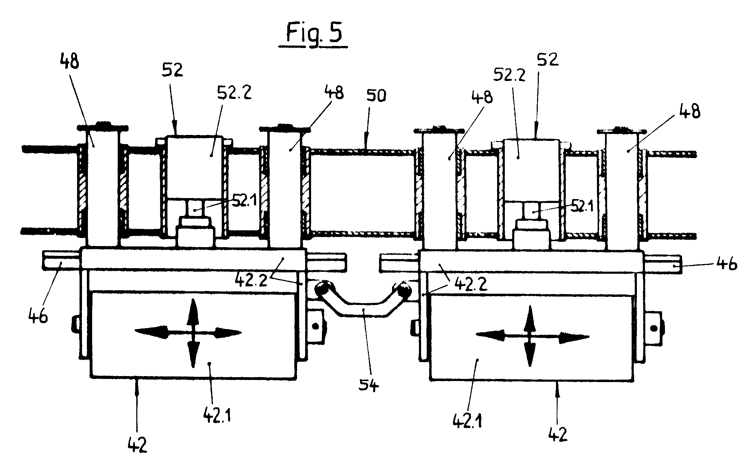

Fig. 5 Einen waagrechten Schnitt durch eine andere Einzelheit der Ausführungsform.

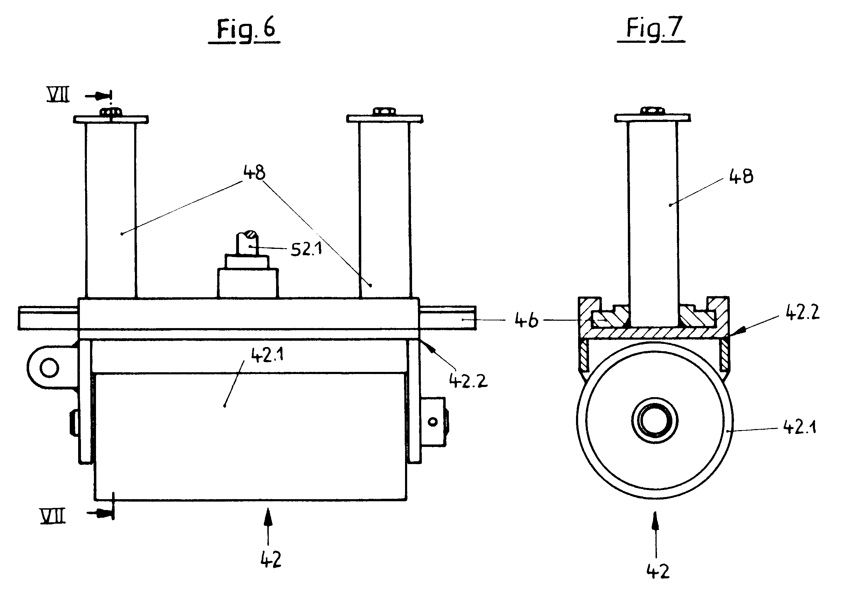

Fig. 6 Eine Draufsicht auf eine Hälfte dieser anderen Einzelheit.
Fig. 7 Einen vertikalen Längsschnitt nach der Linie VII-VII in Fig. 6.

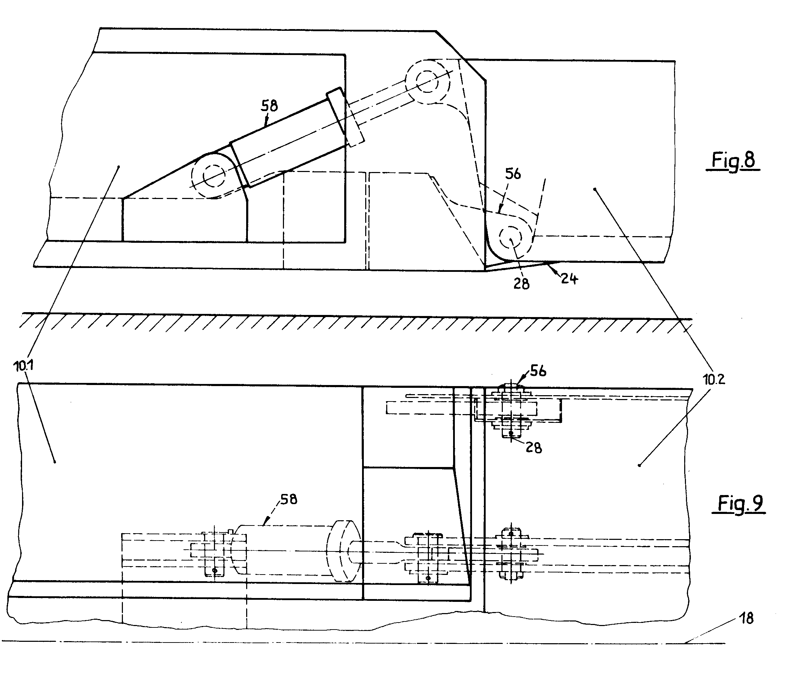

Fig.8u.9 Eine Seitenansicht bzw. Draufsicht der Knickstelle des Fahrgestells
Im Ausführungsbeispiel weist der erfindungsgemäße Schlepper ein im großen und ganzen zweiteiliges Fahrgestell (10) auf, an dessen größerem einheitlichem Vorderteil (10.1) zwei antreibbare, lenkbare Vorderräder (12) mit waagrechten Drehachsen (14) gelagert sind und vorn eine Kabine (16) für den Schlepperfahrer aufsitzt. Der Hinterteil (10.2) des Fahrgestells besteht aus einer linken Hälfte (10.2.1) und einer rechten Hälfte (10.2.2), welche bezüglich einer die Längsachse (18) des Schleppers enthaltenden vertikalen Symmetrieebene, die senkrecht auf einer eben gedachten Fahrbahn des Schleppers steht, spiegelbildlich, aber sonst gleich ausgestaltet sind. Jede Hälfte des Fahrgestell-Hinterteiles (10.2) weist ein antreibbares Hinterrad (20) auf, das mit dem gegenüberliegenden zweiten Hinterrad um dieselbe gedachte waagrechte Querachse (22) läuft, die auf der die Längsachse (18) enthaltenden vertikalen Symmetrieebene senkrecht steht, was auch für die Drehachsen (14) der geradeaus gestellten Vorderräder (12) gilt, und durch zwei nicht gezeigte Achsstummel der Hinterräder (20) verkörpert ist

An seinem hinteren Ende weist der Fahrgestell-Vorderteil (10.1) eine Hubschaufel (24) auf, die bei Drehung des Vorderteiles um die fluchtenden Vorderräder-Drehachsen (14) die Fahrbahn des Schleppers fast berührt, damit das Bugfahrwerk des zu schleppenden Flugzeuges auf die von der Fahrbahn getrennte. Plattform der Hubschaufel gerollt werden kann. Die also um die fluchtenden Drehachsen (14) schwenkbare Hubschaufel (24) erstreckt sich in Richtung der Schlepper-Längsachse (18) bis zu den beiden Hinterrädern (22) in den Hälften (10.2.1 bzw. 10.2.2) des Fahrgestell-Hinterteiles, welche eine nach hinten sowie oben und unten offene Ausnehmung (26) dieses gegabelten Hinterteiles seitlich begrenzen.

Der Vorderteil (10.1) und der Hinterteil (10.2) des Fahrgestells sind gelenkig miteinander verbunden längs einer waagrechten Knickachse (28), welche die Schlepper-Längsachse (18) senkrecht kreuzt und waagrecht ungefähr in Höhe einer nach oben weisenden ebenen Unterstützungsfläche (24.1) der Hubschaufel (24) verläuft. Dabei liegt die Knickachse (28) ungefähr am vorderen Ende der waagrechten Unterstützungsfläche (24.1), die bei durch Knicken des Fahrgestells (10) abgesenkter Hubschaufel (24) nach hinten abfällt und bei durch Strecken des Fahrgestells angehobener Schaufel waagrecht liegt.

Die Hubschaufel (24) ist in der Mitte ihres vorderen Endes mit einem als Welle dienenden Achsstummel (30) großen Durchmessers versehen, der bei gestrecktem Fahrgestell (10) waagrecht liegt und von der die Schlepper-Längsachse (18) enthaltenden vertikalen Ebene halbiert wird. Am vorderen Ende des drehbar am Fahrgestell-Vorderteil (10.1) gelagerten Achsstummels (30) ist die Mitte eines querliegenden Wipphebels (32) drehfest angeordnet, dessen zwei gekröpfte Arme an ihren freien Enden durch die Kolbenstangen(34.1) je eines stehenden Hydraulikzylinders (34) am Fahrgestell-Vorderteil (10.1) abgestützt sind. Die beiden Hydraulikzylinder (34) sind, wie nicht gezeigt ist, durch eine drosselbare Hydraulikleitung miteinander verbunden, so daß bei Drosselung die unbelastete Hubschaufel (24) keine unabsichtliche Drehbewegung aus ihrer horizontalen Normallage heraus ausführt und bei Nichtdrosselung die durch ein mit den Bugrädern voraus schräg nach vorn stehendes Bugfahrwerk eines in Kurvenfahrt geschleppten Flugzeuges belastete Hubschaufel (24) eine sich der seitlichen Neigung des Bugfahrwerkes anpassende Drehbewegung ausführen kann, welche den Schlepper von entsprechenden Belastungen freihält.

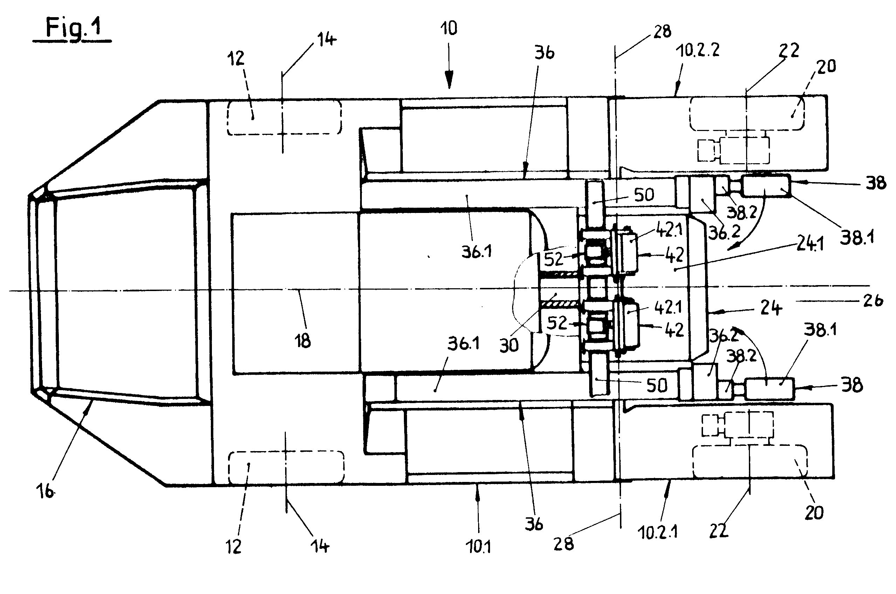

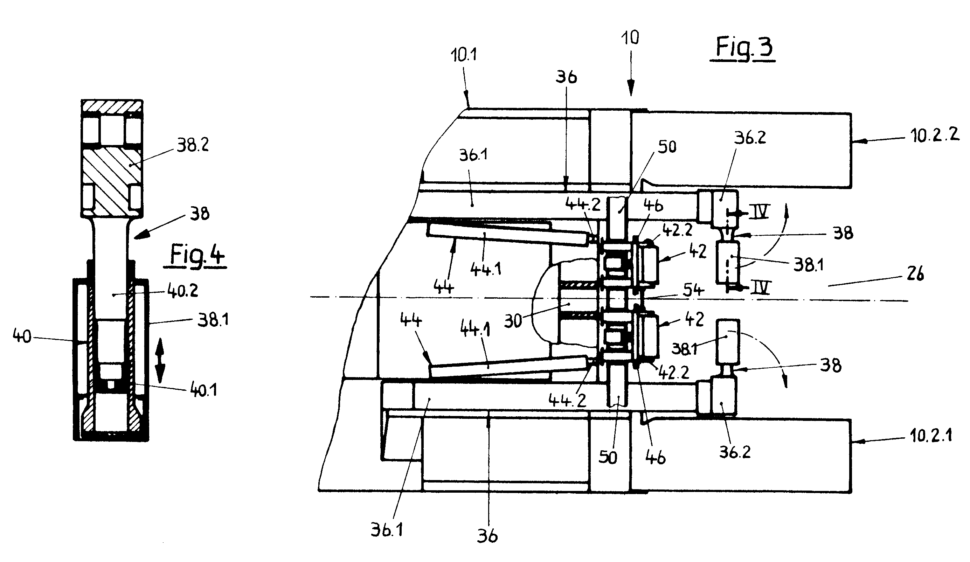

Neben den beiden Hälften des Fahrgestell-Hinterteiles (10.2), also seitlich neben der Hubschaufel (24), ragen in die Fahrgestell-Ausnehmung (26) zwei parallele, ungefähr waagrecht angeordnete Teleskopstangen (36), die mittels nicht gezeigter Hydraulikzylinder längenverstellbar sind. Der nicht längs-verschiebbare Teil (36.1) jeder Teleskopstange ist am Fahrgestell-Vorderteil (10.1) befestigt oder vorzugsweise dort mit seinem vorderen Ende angelenkt. Der längs-verschiebbare Teil (36.2) jeder Teleskopstange ist an seinem hinteren Ende mit einem um eine senkrechte Achse drehbaren Zugarm (38) versehen, der zwischen einer in Fig. 1 gezeigten Längslage neben der benachbarten Hälfte des Fahrgestell-Hinterteiles (10.2) und einer in Fig. 3 gezeigten senkrechten Querlage in den Pfeilrichtungen schwenkbar ist, wobei die zwei Zugarme (38) in ihren jedenfalls waagrechten Querlagen fluchten.

Jeder Zugarm (38) ist dadurch bezüglich der Schlepper-Längsachse (18) querverschieblich angeordnet, daß er eine kreiszylindrische Hohlwalze (38.1) aufweist, die koaxial einen Hydraulikzylinder (40) aufnimmt und mit dessen Zylinder (40.1) drehbar auf seiner Kolbenstange (40.2) gelagert ist, die durch einen verstärkten Endabschnitt (38 2) des Zugarmes (38) verlängert ist, welcher, wie beschrieben, an der zugeordneten Teleskopstange (36) angelenkt ist. Der Endabschnitt (38.2) ist ebenso wie die anschließende Kolbenstange (40.2) mit einem Hohlraum für den Durchfluß von Hydraulikflüssigkeit versehen, die an der Stirnseite der Kolbenstange (40 2) in den Zylinder (40. 1) aus- und eintritt. Die beiden Hydraulikzylinder (40) sind über an die Endabschnitte (38.2) der Zugarme (38) angeschlossene Leitungen, die in den Teleskopstangen (36) verlegt sind, in der Weise miteinander verbunden, daß, wie bei den beiden Hydraulikzylindern (34), Hydraulikflüssigkeit aus dem einen Zylinder in den anderen überwechseln kann, so daß die beiden Hohlwalzen (38.1) der querliegenden Zugarme stets in derselben waagrechten Richtung und im selben Maße durch Bugräder verschoben werden.

Am vorderen Ende der Fahrgestell-Ausnehmung (26) ist oberhalb der Hubschaufel (24) ein Paar Bugrad-Halter (42) angeordnet, die mittels zweier spiegelbildlicher Hydraulikzylinder (44), deren Zylinder (44.1) an den nicht längs-verschieblichen Teilen (36.1) der Teleskopstangen befestigt sind, parallel nach hinten bis zum Ende der Hubschaufel (24) bewegt werden können. Jeder Halter (42), der am vorderen oberen Viertel eines Bugradumfanges angreift, weist eine kreiszylindrische Walze (42.1) auf, deren die Schlepper-Längsachse (18) senkrecht kreuzende waagrechte Drehachse an einem gegabelten, im wesentlichen U-förmigen Walzenachs-Halter (42.2) gelagert ist, der mittels einer waagrechten Schiene (46) quergeführt ist. Diese Querführung ist dadurch doppelt längsgeführt, daß zwei an den Enden der Schiene (46) senkrecht befestigte parallele Bolzen (48) längsverschieblich an einer waagrechten Brücke 50 gelagert sind, die ihrerseits mit ihren zwei Enden an je einem der beiden nicht längsverschieblichen Teile (36.1) der Teleskopstangen in deren Längsrichtungen dadurch verschiebbar gelagert sind, daß die Kolbenstangen (44.2) der Hydraulikzylinder (44) an der Brücke auf beiden Seiten des Paares Bugrad-Halter (42) angreifen. - Zwischen je zwei demselben Halter (42) zugeordneten längsführenden Bolzen (48) ist an der Brücke (50) ein kleiner Hydraulikzylinder (52) angeordnet, dessen Kolbenstange (52.1) bolzenparallel mittig am zugeordneten Walzenachs-Halter (42.2) angreift, der mit dem benachbarten Halter (42.2) mittels einer ungefähr V-förmig gebogenen Koppelstange (54) für eine gemeinsame waagrechte Hin- und Herbewegung verbunden ist. Auch die zwei brückenfesten Zylinder (52.2) der beiden Hydraulikzylinder (52) sind miteinander verbunden, und zwar durch eine nicht gezeigte Hydraulikleitung, die bewirkt, daß sich die beiden Bugrad-Halter 42 bezüglich der Brücke (50) stets in gleichem Ausmaß, aber in einander entgegengesetzten Richtungen bewegen.

Der Vorderteil (10.1) und der Hinterteil (10.2) des Fahrgestells sind dadurch gelenkig miteinander verbunden, daß einerseits die linke Hälfte (10.2.1) und andererseits die rechte Hälfte (10.2.2) des Fahrgestell-Hinterteils je ein Drehgelenk (56) bilden, deren Zapfen fluchten und die Knickachse (28) definieren.

Zum Knicken und Strecken des Fahrgestells (10) unter Absenkung bzw. Anhebung der Knickachse (28) ist ein Paar Hydraulikzylinder (58) vorgesehen, die sich auf beiden Seiten des Fahrgestell-Vorderteils (10.1) erstrecken und vorn an diesem sowie hinten am Fahrgestell-Hinterteil (10.2) angelenkt sind, so daß die oben liegenden Hydraulikzylinder (58) dort ungefähr über der Knickachse (28) angreifen.

## Patentansprüche

1. Flugzeug-Schlepper ohne Schleppstange, mit einem geteilten Fahrgestell (10), dessen Vorderradachsen (14) an einem Vorderteil (10.1) und dessen Hinterradachs (22) stummel an einem, durch eine Ausnehmung (26) zur Aufnahme des Flugzeug-Bugfahrwerks gegabelten, Hinterteil (10.2) gelagert sind, welches mittels einer einzigen, hinterradachsparallelen Knickachse (28) gelenkig mit dem getrennten Vorderteil (10.1) verbunden ist, an dem hinter der Knickachse (28) am vorderen Ende der Fahrgestell-Ausnehmung (26) eine Hubschaufel (24) angeordnet ist, die eine Unterstützungsfläche (24.1) für den Hub des aufgenommenen Bugfahrwerks aufweist, welche bei geknicktem Fahrgestell (10) nach hinten sowie unten abfällt und bei gestrecktem Fahrgestell (10) waagrecht liegt; mit zwei spiegelbildlichen Zugarmen (38), die am hinteren Ende der Fahrgestell-Ausnehmung (26) angeordnet und sowohl aus einer Querlage zum Hintergreifen je eines Bugrades in eine Längslage vor dessen Aufnahme in die Ausnehmung (26) als auch nach vorn bewegbar sind; und mit mindestens einem Bugrad-Halter (42), der am vorderen Ende der Fahrgestell-Ausnehmung (26) oberhalb der Hubschaufel (24) angeordnet und nach hinten bewegbar ist, dadurch **gekennzeichnet,** daß die Hubschaufel (24) zu ihrer Drehung mit einer bei gestrecktem Fahrgestell (10) waagrecht, parallel zur Längsachse (18) desselben liegenden Welle (30) versehen ist, die am Fahrgestell-Vorderteil (10.1) drehbar lagert; und daß die querliegenden Zugarme (38) und/oder der Bugrad-Halter (42) quer zu dieser Längsachse (18) verschieblich gelagert sind.

2. Flugzeug-Schlepper ohne Schleppstange, mit einem Fahrgestell (10), dessen Hinterteil (10.2) durch eine Ausnehmung (26) zur Aufnahme des Flugzeug-Bugfahrwerkes gegabelt ist, an deren vorderem Ende eine Hubschaufel (24) am Fahrgestell-Vorderteil (10.1) angeordnet ist, die eine Unterstützungsfläche (24.1) für den Hub des aufgenommenen Bugfahrwerkes aufweist, welcher mittels einer Hubvorrichtung (56, 58) ausführbar ist; mit zwei spiegelbildlichen Zugarmen (38), die am hinteren Ende der Fahrgestell-Ausnehmung (26) angeordnet und sowohl aus einer Querlage zum Hintergreifen je eines Bugrades in eine Längslage vor dessen Aufnahme in die Ausnehmung (26) als auch nach vorn bewegbar sind; und mit mindestens einem Bugrad-Halter (42), der am vorderen Ende der Fahrgestell-Ausnehmung (26) oberhalb der Hubschaufel (24) angeordnet und nach hinten bewegbar ist, dadurch **gekennzeichnet,** daß die Hubschaufel (24) zu ihrer Drehung mit einer bei Fahrt waagrechten, parallel zur Längsachse (18) des Fahrgestells (10) liegenden Welle (30) versehen ist, die am Fahrgestell-Vorderteil (10.1) drehbar gelagert ist; und daß die querliegenden Zugarme (38) und/oder der Bugrad-Halter (42) quer zu dieser Längsachse (18) verschieblich gelagert sind.

3. Schlepper nach Anspruch 1 oder 2, dadurch gekennzeichnet, daß die Welle (30) der Hubschaufel (24) mit einem querliegenden, zweiarmigen Wipphebel (32) drehfest verbunden ist, welcher an seinen beiden freien Enden mittels je eines einfachwirkenden Hydraulikzylinders (34) unterstützt ist, die durch eine drosselbare Hydraulikleitung (-) miteinander verbunden sind.

4. Schlepper nach einem der Ansprüche 1 bis 3, dadurch gekennzeichnet, daß die hintergreifenden Zugarme (38) je eine am Bugrand abrollende Hohlwalze (38.1) aufweisen, in der koaxial der fest damit verbundene Zylinder (40.1) eines einfachwirkenden Hydraulikzylinders (40) mit schwenkbarer Kolbenstange (40.2) angeordnet ist; und daß diese zwei Zylinder (40) durch eine Hydraulikleitung (-) miteinander verbunden sind.

5. Schlepper nach einem der Ansprüche 1 bis 4, dadurch gekennzeichnet, daß der Bugrad-Halter (42) eine am Bugrad abrollende Walze (42.1) aufweist, deren gegabelter Achs-Halter (42.2) an einer geraden Querführung (46) gelagert ist, die mittels zweier paralleler Längsführungen (48) und eines zumindest einfachwirkenden Hydraulikzylinders (52) zwischen diesen Längsführungen nach hinten bewegbar ist; wobei im Falle zweier Halter (42) zwei durch eine Hydraulikleitung (-) miteinander verbundene einfachwirkende Hydraulikzylinder (52) vorgesehen sind.

6. Schlepper nach Anspruch 5, dadurch gekennzeichnet, daß die beiden Längsführungen (48) an einer die Fahrgestell-Ausnehmung (26) querenden Brücke (50) angeordnet sind, an welcher zwei Hydraulikzylinder (44) zum Bewegen des Bugrad-Halters (42) angreifen.

## Claims

1. Aeroplane tractor without drag link and with a divided wheel frame (10), the front axles (14) of which are borne at a front part (10.1) and the rear axle (22) stubs of which are borne at a rear part (10.2), which is forked by a recess (26) for the reception of the aeroplane nose landing gear and articulatedly connected by means of a single hinged axle (28), which is parallel to the rear wheel axle, with the separated front part (10.1), at which a lifting bucket (24) is arranged at the front end of the wheel frame recess (26) and behind the hinged axle (28), which lifting bucket (24) comprises a support surface (24.1) for the lifting of the received nose landing gear, which support surface (24.1) slopes down rearwardly as well as downwardly when the wheel frame (10) is kinked and lies horizontally when the wheel frame (10) is straight, with two mirror image traction arms (38), which are arranged at the rear end of the wheel frame recess (26) and movable out of a transverse position for engaging behind a respective nose wheel into a longitudinal position before its reception in the recess (26) as well as also forwardly, and with at least one nose wheel holder (42), which is arranged above the lifting bucket (24) at the front end of the wheel frame recess (26) and movable rearwardly, characterised thereby, that the lifting bucket (24) is provided for its rotation with a shaft (30), which when the wheel frame (10) is straight lies horizontally and parallelly to the longitudinal axis (18) of the same and which is mounted to be rotatable at the wheel frame front part (10.1), and that the transversely lying traction arms (38) and/or the nose wheel holder (42) are borne to be displaceable transversely to this longitudinal axis (18).

2. Aeroplane tractor without drag link and with a wheel frame (10), the rear part (10.2) of which is forked by a recess (26) for the reception of the aeroplane nose landing gear and at the front end of which a lifting bucket (24) is arranged at the wheel frame front part (10.1), which lifting bucket (24) comprises a support surface (24.1) for the lifting of the received nose landing gear, which is performable by means of a lifting device (56, 58), with two mirror image traction arms (38), which are arranged at the rear end of the wheel frame recess (26) and movable out of a transverse position for engaging behind a respective nose wheel into a longitudinal position before its reception in the recess (26) as well as also forwardly, and with at least one nose wheel holder (42), which is arranged above the lifting bucket (24) at the front end of the wheel frame recess (26) and movable rearwardly, characterised thereby, that the lifting bucket (24) is provided for its rotation with a shaft (30), which during travel lies horizontally and parallelly to the longitudinal axis (18) of the wheel frame (10) and which is mounted to be rotatable at the wheel frame front part (10.1), and that the transversely lying traction arms (38) and/or the nose wheel holder (42) are borne to be displaceable transversely to this longitudinal axis (18).

3. Tractor according to claim 1 or 2, characterised thereby, that the shaft (30) of the lifting bucket (24) is connected in rotationally secure manner with a transversely disposed two-armed rocker lever (32), which is supported at both its free ends by means of a respective one of two single-acting hydraulic cylinders (34), which are each connected with the other through a throttlable hydraulic duct (-).

4. Tractor according to one of the claims 1 to 3, characterised thereby, that the traction arms (38) engaging from behind each comprise a respective hollow roller (38.1), which rolls along at the nose wheel and in which the cylinder (40.1) of a single-acting hydraulic cylinder (40) with a pivotable piston rod (40.2) is arranged co-axially and firmly connected therewith, and that these two cylinders (40) are each connected with the other through an hydraulic duct (-).

5. Tractor according to one of the claims 1 to 4, characterised thereby, that the nose wheel holder (42) comprises a roller (42.1), which rolls along at the nose wheel and the forked axle holder (42.2) of which is borne at a straight transverse guide (46), which is movable by means of two parallel longitudinal guides (48) and at least one single-acting hydraulic cylinder (52) rearwardly between these longitudinal guides, wherein two single-acting hydraulic cylinders (52), which are each connected with the other through an hydraulic duct (-), are provided in the case of two holders (42).

6. Tractor according to claim 5, characterised thereby, that both the longitudinal guides (48) are arranged at a bridge (50), which crosses the wheel frame recess (26) and at which two hydraulic cylinders (44) engage for the movement of the nose wheel holder (42).

## Revendications

1. Remorqueur d'avion sans barre d'attelage, comportant un châssis (10) en deux parties, dont celle d'avant (10.1) porte les essieux avant (14), celle d'arrière (10.2) en forme de fourche porte les deux-essieux arrière (22) avec entre eux un évidement (26) pour recevoir le train avant de l'avion, les deux parties d'un châssis étant reliées par un axe de pliage (28), parallèle aux demi-essieux et derrière lequel est monté sur la partie avant, vers l'extrémité avant de l'évidement (26), une palette élévatrice (24) équipée d'une surface d'appui (24.1) servant à lever le train avant de l'avion, cette surface étant inclinée vers l'arrière et vers le bas lorsque le châssis est plié, tandis qu'elle est horizontale lorsque le châssis est en ligne,
- deux bras de traction (38), symétrique par rapport au plan vertical médian du remorqueur, situés sur l'extrémité arrière de l'évidement (26) et pouvant, à partir d'une position transversale être amenés en position longitudinale afin de saisir par de-dessous chacun une roue du train avant de l'avion avant sa réception dans l'évidement (26), les bras étant également mobiles vers l'avant,
- au moins un support de roue avant (42), situé vers l'extrémité avant de l'évidement (26), au-dessus de la palette élévatrice (24) et pouvant être déplacé vers l'arrière, caractérisé en ce que la palette élévatrice (24) peut, lorsque le châssis (10) est en ligne, être mise en rotation par l'intermédiaire d'un arbre horizontal (30) parallèle à l'axe longitudinal (18) du châssis et monté dans la partie avant (10.1) de celui-ci, tandis que les bras de traction (38) transversaux et/ou le support (42) de roue avant de l'avion peuvent se déplacer transversalement à cet axe longitudinal (18).

2. Remorqueur d'avion sans barre d'attelage, comportant :
- un châssis (10) dont la partie arrière (10.2) en forme de fourche présente un évidement (26), pour recevoir le train avant de l'avion, à l'extrémité avant duquel est monté, sur la partie avant (10.1) du châssis une palette élévatrice (24) équipée d'une surface d'appui (24.1) servant à lever le train avant de l'avion sous l'action d'un dispositif de levage (56, 58),
- deux bras de traction (38) symétriques par rapport au plan vertical médian du remorqueur, situés vers l'extrémité arrière de l'évidement (26) et pouvant, à partir d'une position transversale être amenés en position longitudinale afin de saisir par-derrière chacun une roue du train avant de l'avion avant sa réception dans l'évidement, les bras pouvant également se déplacer vers l'avant,
- au moins un support de roue avant (42), situé vers l'extrémité avant de l'évidement (26), au-dessus de la palette élévatrice (24) et pouvant être déplacé vers l'arrière,
caractérisé en ce que la palette élévatrice (24) peut, lorsque le remorqueur roule, être mise en rotation par l'intermédiaire d'un arbre horizontal (30), parallèle à l'axe longitudinal (18) du châssis et monté dans la partie avant (10.1) de celui-ci, tandis que les bras de traction transversaux (38) et/ou le support (42) de roue avant de l'avion peuvent se déplacer transversalement à cet axe longitudinal (18).

3. Remorqueur selon la revendication 1 ou 2, caractérisé en ce que l'arbre (30) de manoeuvre de la palette (24) est solidaire en rotation d'un levier transversal basculant, à deux bras dont chacun a son extrémité supportée par un vérin hydraulique (34) à simple effet, les deux vérins étant reliés entre eux par une conduite hydraulique étranglable (-).

4. Remorqueur selon l'une des revendications 1 à 3, caractérisé en ce que les bras de traction (38) portent chacun un rouleau creux (38.1) roulant sur le bord de la roue correspondante du train avant et solidaire coaxialement du cylindre (40.1) d'un vérin hydraulique (40) à simple effet dont la tige de piston (40.2) est montée sur pivot, les deux cylindres (40) étant reliés par une conduite hydraulique (-).

5. Remorqueur selon l'une des revendications 1 à 4, caractérisé en ce que le support (42) de roue de train avant d'avion porte un rouleau (42.1) roulant sur celle-ci et dont l'axe a son support (42.2), en forme de fourche, monté sur un guide rectiligne transversal (46) pouvant se déplacer sur deux guides longitudinaux parallèles (48), vers l'arrière, sous l'action d'au moins un vérin hydraulique (52) à simple effet placé entre ces guides, deux vérins hydrauliques (52) à simple effet, reliés par une conduite hydraulique (-), étant prévus lorsqu'il y a deux supports (42).

6. Remorqueur selon la revendication 5, caractérisé en ce les deux guides longitudinaux (48) sont montés sur une passerelle (50), transversale à l'évidement (26) et soumise à l'action de deux vérins hydrauliques (44) pour déplacer le support de roue (42).
